# EUROPEAN PATENT APPLICATION

(11) **EP 2 233 996 A2**
(43) Date of publication of application: **29.09.2010**
(21) Application number: 10156526.5
(22) Date of filing: 15.03.2010
(51) Int. Cl.: G05B 19/408

(54) **System and method for manufacturing an in-process part**

(30) Priority: 20.03.2009 US 407820
(71) Applicant: General Electric Company, Schenectady, NY 12345 (US)
(72) Inventor: Graham, Michael Evans, Slingerlands, NY 12159 (US); Jakson, John Dennis, Wyoming, OH 45215 (US)
(74) Representative: Gray, Thomas

(57) **Abstract**

A method (40) and system (10) for manufacturing an in-process part (12) is provided. The method (40) includes manufacturing (42) one or more primary features of the in-process part (12). The method also includes measuring (44) multiple locations and attributes of the manufactured in-process part including the primary features. The method further includes designing (46) multiple optimal locations and attributes of multiple secondary features of the in-process part based on the measured locations and attributes of the manufactured in-process part and the primary features. The method also includes manufacturing (48) one or more secondary features of the in-process part based on the optimal design locations and attributes of the secondary features.

## Description

The invention relates generally to part processing and more particularly to manufacturing an in-process part using a functional design.

In general, design of the primary features as well as the secondary features of the part are always established well before the manufacturing of the part. However, variations in such features from nominal definitions of the part are often introduced during manufacturing of the part. For example, the manufactured primary features of a part (such as cast surfaces) will always deviate to some degree from the nominal definition of those surfaces in the original static design of the part. Therefore, manufacturing the secondary features may require re-interpretation of the nominal definition in the design of the secondary features to reduce any further variations in of the attributes, locations, and functionalities of the secondary features of the part.

Traditionally, machine operators use their judgment in devising alignment procedures to approximate the desired location and attributes of the secondary features with respect to the primary features already established on the part. However, such techniques are only attempts to return the secondary feature geometry to some nominal condition, where the final location and attributes of the secondary features are evaluated on some geometric basis with respect to nominal design intent. Once the part is manufactured, the secondary feature is tested against standards established for the nominal secondary features. These original nominal standards may or may not correctly represent the performance standard for the secondary features in their new relative position. In addition to missing the optimal performance window, this can result in wasted labor, lower quality of the manufactured parts, and significant scrap at the end of the manufacturing process. The problem inherent in these techniques is that the in-process expression of the secondary features often compromises design intent in order to compensate for manufacturing variation.

Therefore, it is desirable to remove operator judgment from the process of locating and customizing the final design of the secondary features by recomputing the optimal secondary feature configuration just before the secondary feature is created during the manufacturing process of the part.

In accordance with an embodiment of the invention, a method for manufacturing an in-process part is provided. The method includes manufacturing one or more primary features of the in-process part. The method also includes measuring multiple locations and attributes of the manufactured in-process part and the primary features. The method further includes designing algorithms and logic to compute multiple optimal locations and attributes of multiple secondary features of the in-process part based on the measured locations and attributes of the manufactured in-process part and the primary features. The method also includes manufacturing one or more secondary features of the in-process part based on the optimal design locations and attributes of the secondary features.

In accordance with another embodiment of the invention, a system for processing of an in-process part is provided. The processing system includes a nominal model of an in-process part. The system also includes a machining subsystem for manufacturing the in-process part. The system further includes a measurement subsystem for measuring the in-process part including multiple locations and attributes of the primary and secondary features. The system also includes a computer system configured to receive measurements of the in-process part, a functional design for optimal secondary feature design and multiple nominal tool paths. The computer further includes a processor configured to generate multiple deformed tool paths based the functional design and the measured locations and attributes of the manufactured in-process part and the primary features. The processor is still further configured to design multiple locations and attributes of multiple secondary features of the in-process part based on the measurements. The processor is also configured to adjust multiple tool paths based on the designed optimal locations and attributes of the secondary features of the in-process part.

These and other features, aspects, and advantages of the present invention will become better understood when the following detailed description is read with reference to the accompanying drawings in which like characters represent like parts throughout the drawings, wherein:
FIG. 1 is a schematic block diagram illustrating a system for manufacturing an in-process part in accordance with an embodiment of the invention.
FIG. 2 is a flow chart representing steps in a method for manufacturing an in-process part in accordance with an embodiment of the invention.
FIG. 3 is a perspective view of a nominal turbine engine blade including cooling holes.
FIG. 4 is a perspective view of a partially manufactured turbine engine blade including primary features, employing the method for manufacturing in FIG. 2.
FIG. 5 is a perspective view of a completely manufactured turbine engine blade including cooling holes, employing the method for manufacturing in FIG. 2.

Embodiments of the invention are directed towards a system and method for manufacturing an in-process part. The system and method as described herein may be referred to as a just-in-time design system. As used herein, the term "just-in-time design" refers to technique of the present invention whereby the expression of the final design of the secondary features can be withheld until just before the secondary feature is created. As used herein, the term 'functional design' refers to a rule set, formula, or algorithm for computing an optimal secondary feature design. The functional design is sufficient to compute the optimal locations and attributes of the secondary features as a function or a set of functions of the measured locations and attributes (such as surface finish, density, or other material property) of the primary features of the manufactured in-process part. It is important to note that this invention discloses the idea of computing the final design of secondary (tertiary, etc) features just before they are expressed on the part. No operator judgment or interaction is required.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters are not exclusive of other parameters of the disclosed embodiments.

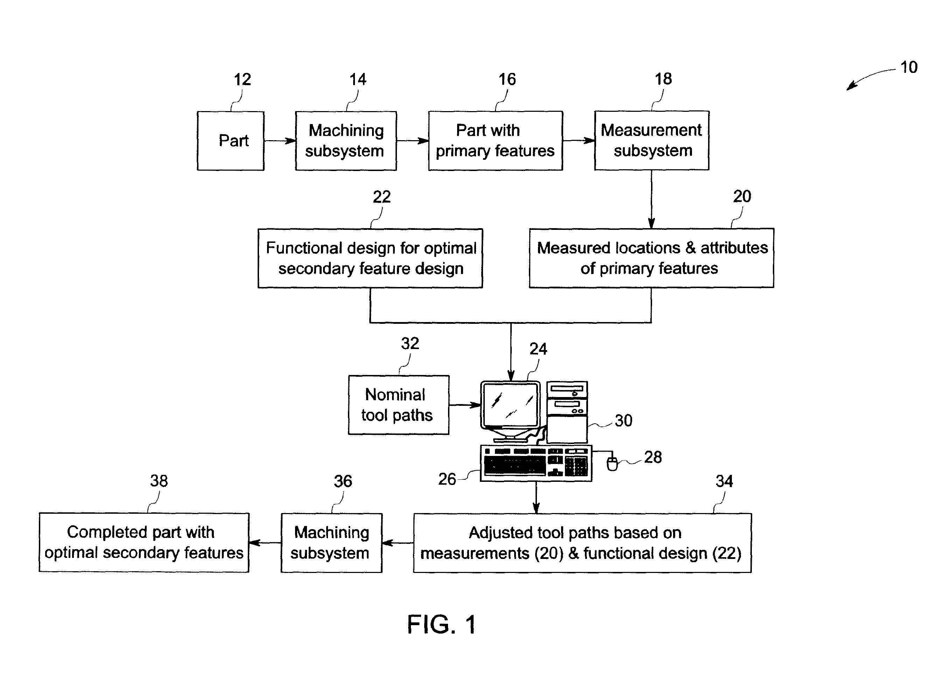

FIG. 1 illustrates a block diagram of a system 10 for processing of an in-process part 12 according to an embodiment of the present invention. The system 10 includes an in-process part 12, which is to be processed. The design of the primary features of the in-process part 12 are established and then created using a manufacturing subsystem 14. The manufacturing subsystem 14 may be a well known process such as, but not limited to, casting, layered deposition or SLA, a milling machine, drilling machine, turning machine, cutting machine, lathe, computer numeric controlled (CNC) machining tools and other conventional machines for shaping, planing, grinding, broaching and sawing. Other non-limiting examples of non-conventional machining systems may include electric arc machining, laser cutting, electro discharge machining and plasma cutting. In one embodiment, the in-process part and the primary features may be manufactured by casting. The in-process part with manufactured primary features 16 is subjected to measurements by a measurement system 18. In this embodiment of the invention, the measurement system 18 may be a well-known measurement device such as, but not limited to, a coordinate measuring machine (CMM). In another embodiment, the measurement system 18 may be an x-ray scanning machine. In yet another embodiment, the measurement system 18 may be an optical scanning machine or an ultrasound-scanning machine, which obtains a series of measurements of the in-process part with primary features 16. The system 10 also includes a computer 30.

The computer 30 receives the series of part measurements including the locations and attributes of the primary features 20. In one embodiment, the attributes may include, but are not limited to, an orientation, location, diameter, and material composition of the subject part. The computer 30 further receives a functional design 22, which is a set of rules, formulas and algorithms suitable for computing the optimal secondary feature design given the measured geometry and part characteristics, and further changing nominal tool paths 32 to effect the optimal secondary feature design on the part of interest. The computer 30 is a general-purpose computer such as a workstation, a personal computer or a machine controller. The computer 30 includes a processor and a memory including random access memory (RAM), read only memory (ROM) and/or other components. A monitor 24, a keyboard 26, and a mouse device 28 are attached to the computer 30. Those skilled in the art will recognize that the computer may operate without the use of the keyboard, monitor, or mouse.

In one embodiment, the rules, formulae, and algorithms that include the functional design 22 may be derived from the original design practices used to design the original part. In another embodiment, or the rules, formulae and algorithms are a subset of practices. In yet another embodiment the rules, formulae and algorithms may be arrived at without knowledge of the original design, but be derived from physical principles such as, but not limited to, flow, thermodynamics, material properties, and structural mechanics. In another exemplary embodiment, the rules, formulae, and algorithms include optimization loops, or other methods for achieving the design goals for the secondary features of interest. Inherent within the functional design are the functional requirements for both the part and the secondary features of interest. The functional requirements may take the form of flow, aerodynamics, cooling, or weight. Those skilled in design will see that there is a very large range of potential functional requirements for any given part or feature that extend beyond the examples given here.

In one embodiment, the computer 30 operates under the control of an operating system stored in the memory to present data such as the series of part measurements, the functional design for optimal secondary feature design and the nominal tool paths to an operator on the display of the monitor 24 and to accept and process commands from the operator via the keyboard 26 and the mouse device 28. In another embodiment, the system does not require an operator and the edited nominal tool paths are constructed automatically from the input data. The computer 30 computes the manufacturing error using one or more computer programs or applications, for example through a graphical user interface. Set forth below is a more detailed discussion of how the computer 30 computes the error. A computer-readable medium, for example, one or more removable data storage devices such as a floppy disc drive or a fixed data storage device such as a hard drive, a CD-ROM drive, or a tape drive tangibly embody the operating system and the computer programs implementing this invention. The computer programs are programmed in C, but other languages such as FORTRAN, C++, or JAVA may be used.

The computer system 30 also includes a processor configured to generate multiple deformed tool paths based on the determination of new designs for the secondary features of interest. The processor is further configured to design multiple locations and attributes of multiple secondary features of the in-process part based on the measurements and adjust multiple tool paths 34 based on the newly re-designed secondary features.

It should be noted that embodiments of the invention are not limited to any particular processor for performing the processing tasks of the invention. The term "processor," as that term is used herein, is intended to denote any machine capable of performing the calculations, or computations, necessary to perform the tasks of the invention. The term "processor" is intended to denote any machine that is capable of accepting a structured input and of processing the input in accordance with prescribed rules to produce an output. It should also be noted that the phrase "configured to" as used herein means that the processor is equipped with a combination of hardware and software for performing the tasks of the invention, as will be understood by those skilled in the art.

The system 10 further includes a machining subsystem 36, which manufactures the secondary features based on an adjusted tool path 34 to form a complete part 38 with primary and secondary features. The machining subsystem 36 may be the same as the machining subsystem 14 as discussed above.

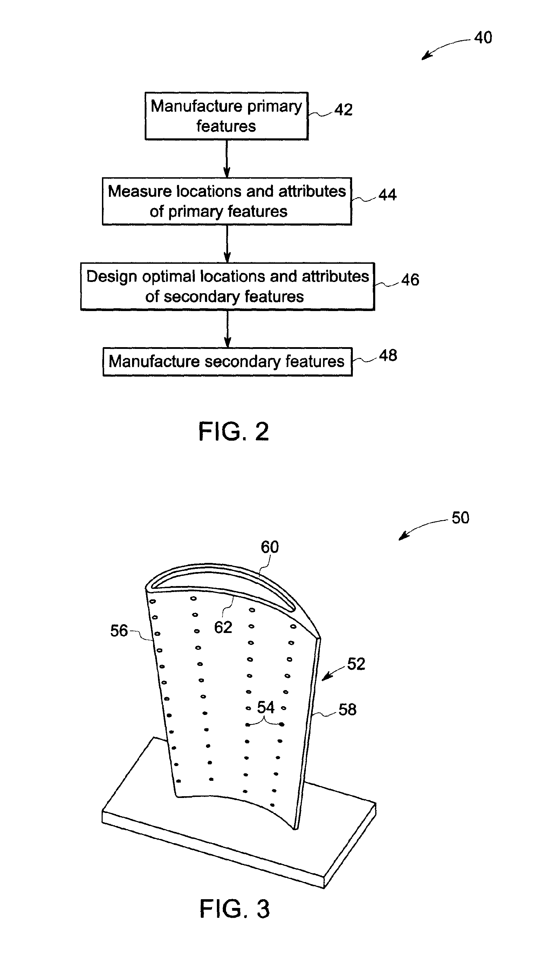

FIG. 2 is a flow chart of an exemplary method 40 for manufacturing of an in-process part. The method 40 includes manufacturing one or more primary features of the in-process part 12 in step 42. In one particular embodiment, the method 40 includes the well-accepted practice of designing the primary features before the step of manufacturing 42 of the primary features. Multiple locations and attributes of the primary features of the manufactured in-process part 12 are then measured in step 44. The method 40 further includes designing 46 optimal locations and attributes of multiple secondary features of the in-process part based on measured characteristics or determination of an error. It is to be noted that the designing 46 of the secondary features of the in-process part may include skillful and analytical planning of the geometrical locations and the attributes to optimize the performance of the part. These measured characteristics differ from the nominal part geometry through manufacturing error which can be computed by the computer system 30 by comparing the part's measurements and attributes to a nominal design. The computer system 30 then uses the functional design to compute the optimized locations and attributes of the secondary features as a function or a set of functions of the actual locations and attributes of the primary features of the manufactured in-process part. In one embodiment, the functional design for computing the error may be based on algorithms. In one particular embodiment, the error may be a deviation of the locations and attributes of the primary features in the manufactured in-process part from multiple nominal locations and attributes of primary features in a nominal model of the in-process part. In yet another embodiment, the method 40 may include obtaining a nominal tool path, which may be received by the computer system 30 as described in FIG. 1, which recomputes the tool paths by applying the functional design and the part measurements. Finally, the method 40 includes manufacturing 48 of one or more secondary features of the in-process part 12 based on the recomputed tool paths. In another embodiment, the functional design might operate directly on the measurements and attributes of the in-process part in order to deform the nominal tool paths to provide an optimally designed secondary feature.

As shown in FIG. 3, by way of example, is a perspective view of a nominal turbine engine blade 50 having cooling holes 54 in the blade airfoil 52 and employing the method for manufacturing in FIG. 2. In the manufacturing of a turbine engine blade 50, the leading edge and blade platform 56, 58, and the external convex surface 60 and a concave surface 62 are the primary features. The primary features are designed and manufactured prior to the manufacturing of secondary features. The secondary features may include the cooling holes 54. The manufacturing of the primary features induces variation from the nominal definitions of the primary features. The reason for such variations in primary features may include casting variations, composition of material used for manufacturing, time for cooling of manufactured parts, differential cooling between a top portion and a bottom part, part process variations of manufacturing of primary features, and grinding error like grinding too long or too deep. Generally, during the course of manufacture, the primary features such as the convex airfoil surface 60 and the concave surface 62 are subject to normal variation, and often the variation of the convex surface 60 may be independent of the variation of the concave surface 62.

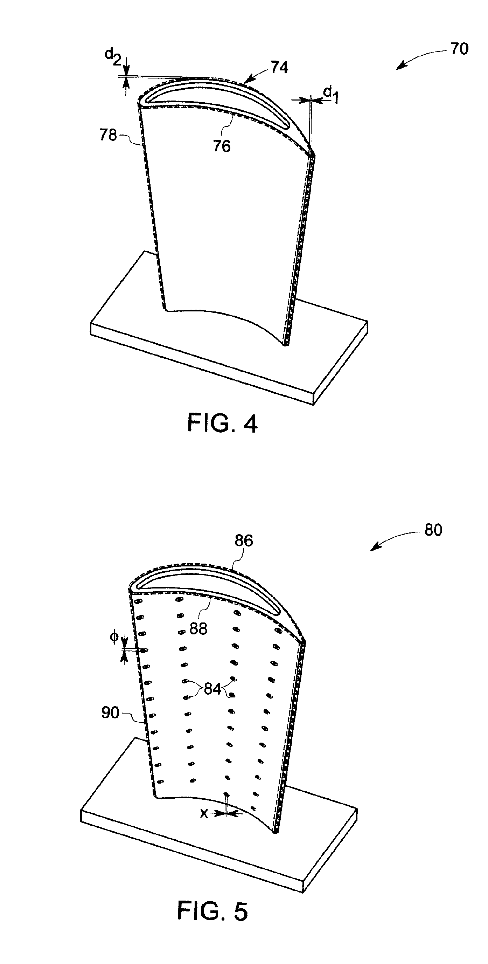

As shown in FIG. 4, by way of an example, is a partially manufactured turbine engine blade 70 (shown in dotted line) without the secondary features such as holes as shown in the nominal turbine engine blade 50 of FIG. 3. The turbine engine blade 70 depicts the variations in its manufactured primary features including an convex surface 74, a concave surface 76, leading edge 78 with respect to the primary features of the nominal turbine engine blade 50 of FIG. 3. The variations in the airfoil surface 74 with respect to the nominal turbine blade are shown by the offsets d₁ and d₂. The variations may not be as uniform as shown in the FIG. 4 and may include other types of variations in an in-process part during manufacturing. Furthermore, the airfoil convex surface 74 and the concave surface 76 may not be in an optimal position with respect to each other. In such a case, achieving the intended performance by adjusting the location of the secondary features like the cooling holes and their attributes such as, but not limited to, the orientation and cooling capacity of the secondary feature in the turbine blade, becomes very unlikely while manufacturing the secondary features, unless a functional design is applied.

As shown in FIG. 5, by way of another example, is a complete manufactured turbine engine blade 80 (shown in dotted line) with respect to the nominal turbine engine blade 50 of FIG. 3. The turbine engine blade 80 depicts the variations in its manufactured primary and secondary features including a convex surface 86, a concave surface 88, leading edges 90 and cooling holes 84 with respect to the primary and secondary features of the nominal turbine engine blade 50 of FIG. 3. The cooling holes 84 are drilled in optimal locations in the cooling surface 88 with appropriate attributes such as location, diameter, and angular tolerance to a direction of expected gas flow along the airfoil surface 86 and the cooling surface 88. In the present invention, a designer specifies a functional design that repositions the nominally designed cooling holes on the airfoil surface to some functionally optimal location. In addition to passing through a newly designed location on the airfoil surface, the cooling holes will maintain an angular tolerance to the direction of expected gas flow along the airfoil surface and the cooling surface. The functional design or rule set for manufacturing the secondary features may vary and depend on the design of the part, to be manufactured. In FIG. 5, the location of one of the cooling holes 84 is shown with a surface translational offset x with respect to the cooling holes of the nominal engine turbine blade 50 of FIG. 3. The diameter Φ of one of the cooling holes 84 may be different from the diameter of the corresponding cooling hole of nominal engine turbine blade 50 of FIG. 3. It is to be noted that in this example the computed length of each hole could set the radius of each hole as it passes through the as-manufactured airfoil in order to maintain the desired flow at that point in the as-built part. In another example the number of cooling holes could be increased or decreased.

Given this functional design, or rule set, created in design, a program driving the manufacture of the part would first complete creation of any required primary features, and then measure attributes of the part and any primary features required to exercise the functional design. The program further exercises the functional design or rule set for generating the optimized location and attributes of the secondary features. In this non-limiting example, the controlling program may take the required measurements of the convex and concave airfoil surfaces, and may execute the functional design that specifies the locations and attributes of the required cooling holes. Once the locations and attributes are computed, the nominal tool paths can be adjusted, and then the holes may be drilled accordingly.

Advantageously, the present method for manufacturing an in-process part may reduce considerable setup times incurred during machine adjustment for addressing the problems in the processing and manufacture of the parts. The present method also reduces requirements for operator judgment. Thus, skilled operators especially assigned for this task may not be required. Further, the present invention enhances the quality of the manufactured parts resulting in reduced scrap and rework at the end of the manufacturing process. The present method also causes reduced inventory of parts that are awaiting design approval. The present invention further brings about reduced functional variation, thereby, the parts become functionally interchangeable and system tolerances and variations in system process capability are reduced.

It is to be understood that not necessarily all such advantages described above may be achieved in accordance with any particular embodiment. Thus, for example, those skilled in the art will recognize that the systems and methods described herein may be embodied or carried out in a manner that achieves or optimizes one advantage or group of advantages as taught herein without necessarily achieving other objects or advantages as may be taught or suggested herein.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A method for manufacturing an in-process part, comprising:
   manufacturing one or more primary features of the in-process part;
   measuring a plurality of locations and attributes of the manufactured in-process part and the primary features;
   designing a plurality of optimal locations and attributes of a plurality of secondary features of the in-process part based on the measured locations and attributes of the manufactured in-process part and the primary features ; and
   manufacturing one or more secondary features of the in-process part based on the optimal design locations and attributes of the secondary features.
2. The method according to clause 1, wherein the determination of the optimal design locations and attributes of any secondary features is based on a functional design and measured locations and attributes of the manufactured in-process part and the primary features.
3. The method according to any preceding clause, wherein the functional design generates the plurality of locations and attributes of the plurality of secondary features as a function or a set of functions of the plurality of locations and attributes of the manufactured in-process part and the primary features.
4. The method according to any preceding clause wherein the functional design may be based on an algorithm, a formula, or a rule set.
5. The method according to any preceding clause, wherein the measured locations and attributes of the manufactured in-process part and the primary features disclose an error which is a deviation of the plurality of locations and attributes of the primary features in the manufactured in-process part from a plurality of nominal locations and attributes of primary features in a nominal model of the in-process part.
6. The method according to any preceding clause, further comprising obtaining a nominal tool path.
7. The method according to any preceding clause, wherein the manufacturing one or more secondary features of the in-process part comprises adjusting a plurality of tool paths based on the error.
8. The method according to any preceding clause, further comprising adjusting tool paths from the nominal tool path to compensate for the error in the manufacture of secondary features of in-process part.
9. The method according to any preceding clause, comprising designing a plurality of primary features of the in-process part prior to the manufacturing of the primary features.
10. A system for processing of an in-process part, comprising:
   a nominal model of the in-process part;
   a machining subsystem for manufacturing the in-process part;
   a measurement subsystem for measuring a plurality of locations and attributes of the in-process part and the primary and secondary features;
   a computer system configured to receive measurements of the in-process part, a functional design for optimal secondary feature design and a plurality of nominal tool paths, wherein the computer system comprises:
      a processor configured to generate a plurality of deformed tool paths based on the functional design and the measured locations and attributes of the manufactured in-process part and the primary features, wherein the processor is further configured to:
         design a plurality of optimal locations and attributes of a plurality of secondary features of the in-process part based on the measurements; and
         adjust a plurality of tool paths based on the designed plurality of optimal locations and attributes of the secondary features of the in-process part.
11. The system according to any preceding clause, wherein the measurement subsystem comprises a coordinate measuring machine.
12. The system according to any preceding clause, wherein the measurement subsystem comprises a x-ray scanning machine.
13. The system according to any preceding clause, wherein the measurement subsystem comprises an optical scanning machine.
14. The system according to any preceding clause, wherein the measurement subsystem comprises an ultrasound-scanning machine.
15. The system according to any preceding clause, wherein the processor is further configured to obtain a plurality of nominal tool paths.
16. The system according to any preceding clause, wherein the processor is further configured to compute the plurality of locations and attributes of the plurality of secondary features as a function or a set of functions of the plurality of locations and attributes of the primary features of the in-process part.
17. The system according to any preceding clause, wherein the processor is further configured to compute the plurality of locations and attributes of the plurality of secondary features via an algorithm and an optimization loop.
18. The system according to any preceding clause, wherein the processor is further configured to adjust tool paths from a nominal tool path to compensate the error in the manufacture of secondary features of the in-process part.

## Claims

1. A method (40) for manufacturing an in-process part (12, 16), comprising:
manufacturing (42) one or more primary features of the in-process part ;
measuring (44) a plurality of locations and attributes of the manufactured in-process part and the primary features;
designing (46) a plurality of optimal locations and attributes of a plurality of secondary features of the in-process part based on the measured locations and attributes of the manufactured in-process part and the primary features ; and
manufacturing (48) one or more secondary features of the in-process part based on the optimal design locations and attributes of the secondary features.

2. The method (40) according to claim 1, wherein the determination of the optimal design locations and attributes of any secondary features is based on a functional design (22) and measured locations and attributes of the manufactured in-process part (12, 16) and the primary features.

3. The method (40) according to claim 2, wherein the functional design (22) generates the plurality of locations and attributes of the plurality of secondary features as a function or a set of functions of the plurality of locations and attributes of the manufactured in-process part (12, 16) and the primary features.

4. The method (40) according to claim 2 or claim 3, wherein the functional design (22) may be based on an algorithm, a formula, or a rule set.

5. The method (40) according to any preceding claim, wherein the measured locations and attributes of the manufactured in-process part and the primary features (20) disclose an error which is a deviation of the plurality of locations and attributes of the primary features in the manufactured in-process part from a plurality of nominal locations and attributes of primary features in a nominal model of the in-process part (12,16).

6. The method (40) according to any preceding claim, further comprising adjusting a plurality of tool paths (34) from a plurality of nominal tool paths (32) to compensate for the error in the manufacture of secondary features of in-process part (12, 16).

7. A system (10) for processing of an in-process part (12), comprising:
a nominal model of the in-process part (12);
a machining subsystem (14) for manufacturing the in-process part (12);
a measurement subsystem (18) for measuring a plurality of locations and attributes of the in-process part and the primary and secondary features;
a computer system (30) configured to receive measurements of the in-process part, a functional design (22) for optimal secondary feature design and a plurality of nominal tool paths (32), wherein the computer system (30) comprises:
a processor configured to generate a plurality of deformed tool paths based on the functional design (22) and the measured locations and attributes (20) of the manufactured in-process part and the primary features, wherein the processor is further configured to:
design a plurality of optimal locations and attributes of a plurality of secondary features of the in-process part based on the measurements; and
adjust a plurality of tool paths based on the designed plurality of optimal locations and attributes of the secondary features of the in-process part.

8. The system (10) according to claim 7, wherein the processor is further configured to compute the plurality of locations and attributes of the plurality of secondary features as a function or a set of functions of the plurality of locations and attributes of the primary features of the in-process part.

9. The system (10) according to claim 7 or claim 8, wherein the processor is further configured to compute the plurality of locations and attributes of the plurality of secondary features via an algorithm and an optimization loop.

10. The system (10) according to any of claims 7 to 9, wherein the processor is further configured to adjust tool paths from a nominal tool path to compensate the error in the manufacture of secondary features of the in-process part.
